# EUROPÄISCHE PATENTANMELDUNG

(11) **EP 1 055 652 A1**
(43) Veröffentlichungstag der Anmeldung: **29.11.2000**
(21) Anmeldenummer: 00109865.6
(22) Anmeldetag: 10.05.2000
(51) Int. Cl.: C06B 21/00, B01J 2/04

(54) **Verfahren zur Herstellung feinpartikulärer Explosivstoffe**

(30) Priorität: 22.05.1999 DE 19923730
(71) Anmelder: FRAUNHOFER-GESELLSCHAFT ZUR FÖRDERUNG DER ANGEWANDTEN FORSCHUNG E.V., 80636 München (DE)
(72) Erfinder: Teipel, Ulrich, Dipl.-Ing., 76327 Pfinztal (DE); Kröber, Hartmut, Dipl.-Ing., 76131 Karlsruhe (DE); Krause, Horst, Dr., 76327 Pfinztal (DE); Reinhard, Werner, 66978 Clausen (DE); Leisinger, Karlfred, 76149 Karlsruhe (DE)
(74) Vertreter: Lichti, Heiner, Dipl.-Ing.

(57) **Zusammenfassung**

Ein Verfahren zur Herstellung feindisperser Explosivstoffe durch Umkristallieren des Explosivstoffs in einem Lösungsmittel und anschließendes Entfernen des Lösungsmittels zeichnet sich dadurch aus, daß der Explosivstoff in wenigstens einem überkritischen Fluid gelöst und die überkritische Lösung unter Überführen des Lösungsmittels in einen unterkritischen Zustand und unter Bildung feiner Explosivstoff-Partikel schlagartig expandiert wird. Zur schlagartigen Expansion der Lösung werden bevorzugt Düsen, insbesondere mit über ihre Länge variierendem Durchmessern, wie Lavaldüsen, verwendet. Mit dem erfindungsgemäßen Verfahren werden feine Explosivstoffpartikel mit definierter mittlerer Partikelgröße, enger Partikelgrößenverteilung und folglich hoher Schüttdichte erhalten.

## Beschreibung

Die Erfindung betrifft ein Verfahren zur Herstellung feindisperser Explosivstoffe, indem der Explosivstoff durch Lösen in einem Lösungsmittel und anschließendes Entfernen des Lösungsmittels umkristallisiert wird.

Bei der Synthese kristalliner Explosivstoffe entstehen in der Regel sehr unregelmäßige und grobe Partikel. Da bei der Anwendung bzw. bei der Verarbeitung kompaktierfähige Partikel mit definierter mittlerer Partikelgröße, enger Partikelgrößenverteilung und hoher Schüttdichte erwünscht sind, ist es bekannt, die Korneigenschaften, insbesondere die Kornform, durch Umkristallisation der kristallinen Explosivstoffe aus einer Lösung zu verbessern. Hierbei wird der kristalline Explosivstoff meist unter Erwärmen in einem oder mehreren geeigneten Lösungsmitteln gelöst und durch definiertes Abkühlen der Explosivstoff auskristallisiert. Dieser Vorgang kann gegebenenfalls mehrfach durchgeführt werden. Infolge der Löslichkeitsunterschiede zwischen Explosivstoff und gegebenenfalls vorhandener Verunreinigungen werden unerwünschte Begleitstoffe abgetrennt, weil sie entweder von vorneherein ungelöst bleiben und abgetrennt werden können oder, wenn sie in Lösung gehen, aufgrund ihrer geringen Konzentration in dem Lösungsmittel verbleiben, wenn das Kristallisat bereits ausgefallen ist.

Die Kristallisation ist ein bekanntes thermisches Gewinnungs- oder Trennverfahren, wobei eine Komponente eines aus wenigstens zwei Komponenten bestehenden homogenen Systems, beispielsweise einer Lösung, einer Schmelze oder eines Gasgemischs, unter Bildung einer festen Phase abgetrennt wird. Bei der Kristallisation eines oder mehrerer Feststoffe aus einer Lösung mit molekulardisperser Verteilung der Feststoffe in einem Lösungsmittel wird die Lösung durch Kühlen (Kühlungskristallisation), Verdampfen des Lösungsmittels (Verdampfungskristallisation) oder Kombination beider Varianten übersättigt, wobei durch Abbau dieser Übersättigung der überschüssige Feststoff als Kristallisat anfällt, das mechanisch von der Restlösung abtrennbar ist. Die Übersättigung kann durch Unterdruck (Vakuumkristallisation), Aussalzen, Ausfällen, gegebenenfalls durch Zugabe von Impfkeimen oder Zuführung von mechanischer Energie (Agitation) unterstützt werden.

Nachteilig bei den bekannten Kristallisationsverfahren, wie der Kühlungs- und der Verdampfungskristallisation, ist einerseits der hohe Energieverbrauch, da der Lösung große Wärmemengen zugeführt oder entzogen werden müssen, andererseits weisen die umkristallisierten Partikel häufig einen Restgehalt des zur Umkristallisation verwendeten Lösungsmittels auf.

Weiterhin ist die Extraktion von Feststoffen mit überkritischen Fluiden (SFE, Supercritical Fluid Extraction), bekannt. Überkritische Fluide werden weiterhin als Matrixflüssigkeit zur Durchführung chemischer Reaktionen, z.B. zur Durchführung von Polymerisationen (DE 36 09 829 A1, US 5,663,237), verwendet.

Der Erfindung liegt die Aufgabe zugrunde, ein umweltfreundliches, einfaches und kostengünstiges Verfahren zur Herstellung feindisperser Explosivstoffe hoher Reinheit mit definierten Eigenschaften, wie mittlerer Partikelgröße, enger Partikelgrößenverteilung und hoher Schüttdichte herzustellen.

Erfindungsgemäß wird diese Aufgabe mit einem Verfahren der eingangs genannten Art dadurch gelöst, daß der Explosivstoff in wenigstens einem überkritischen Fluid gelöst und die überkritische Lösung unter Überführen des Lösungsmittels in einen unterkritischen Zustand und unter Bildung feiner Explosivstoff-Partikel schlagartig expandiert wird.

Das verwendete Lösungsmittel weist im überkritischen Zustand ein weitaus höheres Lösevermögen für den jeweiligen Explosivstoff als im unterkritischen Zustand auf. Das überkritische Fluid läßt sich durch Überführen in den unterkritischen Zustand, in dem es beispielsweise in die Gasphase übergeht, leicht von dem ausfallenden Explosivstoff abtrennen, wobei durch die schlagartige Expansion sehr feinkristalline Explosivstoff-Partikel erhalten werden, die bei geringer Partikelgröße nahezu fehlstellenfrei sind, d.h. aus kristalldefektarmen oder -freien Kristallen bestehen. Die erhaltenen Explosivstoff-Partikel zeichnen sich durch eine hohe Reinheit aus und weisen insbesondere keine Reste an Lösungsmittel mehr auf. Durch die schlagartige Expansion fallen die feinen Explosivstoff-Partikel spontan aus, d.h. es kommt im wesentlichen zu keinem Kristallwachstum wie bei den bekannten Kristallisationsverfahren. In dem eingesetzten Explosivstoff gegebenenfalls enthaltene Verunreinigungen werden deshalb auch nicht in die umkristallisierten feinen Partikel eingebaut. Mittels des erfindungsgemäßen Verfahrens ist die Herstellung von Explosivstoffen mit einem mittleren Partikeldurchmesser zwischen etwa 10 nm bis zu etwa 100 µm möglich. Aufgrund der hohen Reinheit der rekristallisierten Partikel müssen diese weder gewaschen noch in anderer Form gereinigt werden. Wird ein Lösungsmittel gewählt, welches im unterkritischen Zustand gasförmig ist, so ist auch eine Trocknung der Partikel nicht erforderlich.

Das erfindungsgemäße Verfahren ist zur Herstellung feiner Partikel von sämtlichen bekannten, bei Raumtemperatur kristallinen Explosivstoffen geeignet, z.B. 2,4,6-Trinitrotoluol (TNT), 1,3,5-Triamino-2,4,6-trinitrobenzol (TATNB), 3-Nitro-1,2,4-triazol-5-on (NTO), Hexanitrostilben (HNS), Cyclotrimethylentrinitramin (Hexogen, RDX), Cyclotetramethylentetranitramin (Oktogen, HMX), Ammoniumdinitramid (ADN), 2,4,6,8,10,12-Hexanitro-2,4,6,8,10,12-hexaazaisowurtzitan (HNIW, aufgrund seiner erstmaligen Synthese am Naval Weapons Center, China Lake, USA, 1989, auch als CL20 bezeichnet), Pentaerythritoltetranitrat (Nitropenta, PETN), Hexanitrodiphenylamin (Hexyl), Tetranitromethylanilin (Tetryl), Nitroguanidin (NQ), Triaminoguanidinnitrat (TAGN), Ammoniumnitrat (AN), etc.

Vorzugsweise findet die schlagartige Expansion der Lösung unter Bildung feiner Explosivstoff-Partikel in einer Düsenströmung statt, die beispielsweise mittels einer Freistrahl-, Kapillardüse od. dgl., oder mittels einer Düse mit über ihre Länge variierendem Durchmesser, z.B. einer Lavaldüse, erzeugt wird. Durch die Expansion der Lösung in der Düse wird durch die schlagartige Druck- und die in der Regel damit verbundene Temperaturabsenkung das Lösevermögen des Fluids durch Übergang vom überkritischen in den unterkritischen Zustand schlagartig erheblich vermindert, so daß der Explosivstoff in Form sehr feiner, reiner Partikel ausfällt. Zur Expansion des überkritischen Fluids können auch mehrere Düsen bzw. ein Düsenaggregat mit mehreren Düsen verwendet werden, die beispielsweise aus Sintermetallplatten gebildet sein können.

Die Expansion des überkritischen Fluids kann entweder gegen Atmosphärendruck oder gegen einen gegenüber Atmosphärendruck erhöhten Druck oder auch eine erhöhte Temperatur durchgeführt werden.

Als Lösungsmittel kommen alle Stoffe in Frage, die im überkritischen Zustand ein ausreichendes Lösevermögen für den jeweiligen Explosivstoff aufweisen. Ist das verwendete Lösungsmittel im unterkritischen Zustand flüssig oder gasförmig, so können die Explosivstoffpartikel beispielsweise mittels eines Filters abgetrennt und getrocknet werden.

Als überkritische Fluide können beispielsweise Kohlendioxid, Distickstoffoxid, Stickstoff, Wasser, Ammoniak, halogenierte Methane oder Ethane, insbesondere fluorierte Methane oder Ethane, z.B. Di- oder Trifluormethan, oder Mischungen hiervon verwendet werden. Bevorzugt werden solche überkritischen Fluide verwendet, welche chemisch weitgehend inert und toxikologisch unbedenklich sind und somit den Einsatz flüssiger, häufig toxischer und entflammbarer Lösungsmittel entbehrlich machen, z.B. CO₂, N₂ oder H₂O.

Zur Erhöhung des Lösevermögens des oder der überkritischen Fluide können auf an sich bekannte Weise Schleppmittel (Modifier) zugesetzt werden, welche beim Expandieren in die Gasphase übergehen. Als solche Schleppmittel kommen vor allem organische Lösungsmittel, wie Ketone, Alkohole od. dgl., z.B. Aceton, Isopropanol etc. in Frage.

Um den Explosivetoff vor dem Lösen in dem überkritischen Fluid möglichst gleichmäßig in einem hierfür geeigneten Extraktionsbehälter zu verteilen, kann der Explosivstoff beispielsweise in einen partikelförmigen inerten Stoff, insbesondere ein Neutralsalz, z.B. Magnesiumsulfat, eingemischt werden.

Die gewünschte Partikelgröße kann durch Variation der Parameter Druck, Temperatur, Konzentration und/oder Verweilzeit während des Lösens des Explosivstoffs im überkritischen Fluid und/oder während der Expansion eingestellt werden. Wie bereits erwähnt, kann die Konzentration des Explosivstoffs im überkritisches Fluid beispielsweise durch Zusetzen eines Modifiers erhöht werden. Weiterhin kann die Expansionszeit des überkritischen Fluids durch die Düsengeometrie variiert werden.

Liegt das Lösungsmittel nach dem Expandieren in flüssiger Phase vor, so werden die Explosivstoff-Partikel nach dem Expandieren durch Filtern aus dem Fluid abgetrennt. Für das Ausfiltern eignen sich insbesondere Sintermetall-Filter.

In bevorzugter Ausführung ist vorgesehen, daß das überkritische Fluid rezirkuliert wird.

Im übrigen kann das Verfahren kontinuierlich oder chargenweise durchgeführt werden.

Nachstehend ist die Erfindung anhand von Ausführungsbeispielen näher erläutert.

### Beispiel 1:

3 g 3-Nitro-1,2,4-triazol-5-on (NTO) werden in 100 g Magnesiumsulfat gleichmäßig verteilt, auf etwa 60°C erwärmt und in einen Extraktionsbehälter überführt. Der Extraktionsbehälter wird mit einem Massenstrom von 4 kg/h überkritischen Kohlendioxids mit einem Druck von 20 MPa und einer Temperatur von etwa 60°C beaufschlagt. Zur Erhöhung des Lösevermögens werden dem Kohlendioxid mittels einer Dosierpumpe kontinuierlich etwa 2,4 ml/h Aceton zugesetzt. Die überkritische Lösung -der überkritische Punkt von Kohlendioxid liegt bei etwa 31°C und 7,3 MPa- wird aus dem Extraktionsbehälter abgezogen, auf etwa 160°C erwärmt und in einer Lavaldüse mit einem engsten Durchmesser von 150 µm in einer Expansionskammer gegen Atmosphärendruck entspannt. Die in der Expansionskammer auf einem Sintermetallfilter abgeschiedenen NTO-Partikel haben eine mittlere Partikelgröße X_{50.3} = 500 nm und bestehen aus nahezu defektfreien Kristallen. Aufgrund des nach der Expansion gasförmigen Kohlendioxids zeichnen sich die Partikel durch eine hohe Reinheit aus, weisen keine Reste an Lösungsmittel auf und müssen folglich weder gewaschen oder gespült, noch getrocknet werden.

Bei der mittleren Partikelgröße X handelt es sich um einen Medianwert (Index "50"). Der Partikeldurchmesser wurde mittels Laserbeugungsspektroskopie ermittelt, welches ein volumenbezogenes Verfahren darstellt und folglich eine Volumenverteilung (Index "3") liefert.

### Beispiel 2:

3 g 2,4,6-Trinitrotoluol (TNT) werden in 100 g Magnesiumsulfat fein verteilt, auf etwa 75°C erwärmt und in einen Extraktionsbehälter überführt. Der Extraktionsbehälter wird mit einem Massenstrom von 3 kg/h überkritischen Kohlendioxids mit einer Temperatur von 75°C und einem Druck von 22 MPa beaufschlagt. Die überkritische Lösung wird aus dem Extraktionsbehälter abgezogen, auf etwa 185°C erwärmt und in einer Düse mit einem Durchmesser von etwa 100 µm in einer Expansionskammer gegen Atmosphärendruck entspannt. Die in der Expansionskammer auf einem Sintermetallfilter abgeschiedenen TNT-Partikel haben eine mittlere Partikelgröße X₅₀,₃ = 10,0 µm.

### Beispiel 3:

3 g 1,3,5-Triamino-2,4,6-Tinitrobenzol (TATNB) werden in 100 g Magnesiumsulfat fein verteilt, auf etwa 40°C erwärmt und in einen Extraktionsbehälter überführt. Der Extraktionsbehälter wird mit einem Massenstrom von 4,5 kg/h überkritischen Kohlendioxids mit einer Temperatur von 40°C und einem Druck von 25 MPa beaufschlagt. Die überkritische Lösung wird aus dem Extraktionsbehälter abgezogen, auf etwa 120°C erwärmt und in einer Düse mit einem Durchmesser von 150 µm in einer Expansionskammer gegen Atmosphärendruck entspannt. Die in der Expansionskammer auf einem Sintermetallfilter abgeschiedenen TATNB-Partikel haben eine mittlere Partikelgröße X_{50,3} = 2 µm.

## Patentansprüche

1. Verfahren zur Herstellung feindisperser Explosivstoffe, indem der Explosivstoff durch Lösen in einem Lösungsmittel und anschließendes Entfernen des Lösungsmittels umkristallisiert wird, dadurch gekennzeichnet, daß der Explosivstoff in wenigstens einem überkritischen Fluid gelöst und die überkritische Lösung unter Überführen des Lösungsmittels in einen unterkritischen Zustand und unter Bildung feiner Explosivstoff-Partikel schlagartig expandiert wird.

2. Verfahren nach Anspruch 1, dadurch gekennzeichnet, daß die Lösung in einer Düsenströmung expandiert wird.

3. Verfahren nach Anspruch 2, dadurch gekennzeichnet, daß die Düsenströmung mittels einer Freistrahl- oder Kapillardüse erzeugt wird.

4. Verfahren nach Anspruch 2, dadurch gekennzeichnet, daß die Düsenströmung mittels einer Düse mit über ihre Länge variierendem Durchmesser, z.B. einer Lavaldüse, erzeugt wird.

5. Verfahren nach Anspruch 3 oder 4, dadurch gekennzeichnet, daß mehrere Düsen bzw. ein Düsenaggregat mit mehreren Düsen verwendet werden.

6. Verfahren nach einem der Ansprüche 1 bis 5, dadurch gekennzeichnet, daß das überkritische Fluid aus der Gruppe Kohlendioxid, Distickstoffoxid, Stickstoff, Wasser, Ammoniak, halogenierte Methane, halogenierte Ethane ausgewählt und in reiner Form, oder in Mischung eingesetzt wird.

7. Verfahren nach einem der Ansprüche 1 bis 6, dadurch gekennzeichnet, daß dem überkritischen Fluid zur Erhöhung des Lösevermögens wenigstens ein Schleppmittel (Modifier) zugesetzt wird, das beim Expandieren der Lösung in die Gasphase übergeht.

8. Verfahren nach Anspruch 7, dadurch gekennzeichnet, daß als Schleppmittel organische Lösungsmittel, wie Ketone, Alkohole, od. dgl., zugesetzt werden.

9. Verfahren nach einem der Ansprüche 1 bis 8, dadurch gekennzeichnet, daß der Explosivstoff vor dem Lösen in dem überkritischen Fluid in einen partikelförmigen, inerten Stoff eingemischt wird.

10. Verfahren nach Anspruch 9, dadurch gekennzeichnet, daß als partikelförmiger Stoff ein Neutralsalz, wie Magnesiumsulfat, verwendet wird.

11. Verfahren nach einem der Ansprüche 1 bis 10, dadurch gekennzeichnet, daß die Partikelgröße des Explosivstoffs durch Variation der Parameter Druck, Temperatur, Konzentration und/oder Verweilzeit während des Lösens des Explosivstoffs im überkritischen Fluid und/oder während der Expansion eingestellt wird.

12. Verfahren nach einem der Ansprüche 1 bis 11, dadurch gekennzeichnet, daß die Explosivstoff-Partikel nach dem Expandieren durch Filtern aus dem Fluid abgetrennt werden.

13. Verfahren nach Anspruch 12, dadurch gekennzeichnet, daß die Explosivstoff-Partikel mittels eines Sintermetall-Filters abgetrennt werden.

14. Verfahren nach einem der Ansprüche 1 bis 13, dadurch gekennzeichnet, daß das überkritische Fluid rezirkuliert wird.

15. Verfahren nach einem der Ansprüche 1 bis 14, dadurch gekennzeichnet, daß es kontinuierlich durchgeführt wird.
